# EUROPÄISCHE PATENTANMELDUNG

(11) **EP 4 667 198 A1**
(43) Veröffentlichungstag der Anmeldung: **24.12.2025**
(21) Anmeldenummer: 25184196.1
(22) Anmeldetag: 20.06.2025
(51) Int. Cl.: B29C 70/38, B29D 99/00

(54) **FASERLEGEKOPF ZUM ABLEGEN VON FASERMATERIAL EINES FASERVERBUNDWERKSTOFFES**

(30) Priorität: 21.06.2024 DE 102024117626
(71) Anmelder: Deutsches Zentrum für Luft- und Raumfahrt e.V., 53227 Bonn-Oberkassel (DE)
(72) Erfinder: Nguyen, Chinh, 31224 Peine (DE); Krombholz, Christian, 21614 Buxtehude (DE)
(74) Vertreter: Gramm, Lins & Partner Patent- und Rechtsanwälte PartGmbB

(57) **Zusammenfassung**

Die Erfindung betrifft einen Faserlegekopf zum Ablegen von Fasermaterial eines Faserverbundwerkstoffes aufweisend ein Fasermaterial und ein das Fasermaterial einbettendes Matrixmaterial auf ein Formwerkzeug zur Herstellung einer Faserpreform für die Herstellung eines Faserverbundbauteils, mit
- einer Faserbereitstellungseinrichtung zum Bereitstellen von Fasermaterial an dem Faserlegekopf und
- einer Ablegeeinheit, die zum Ablegen des dem Faserlegekopf durch die Faserbereitstellungseinrichtung bereitgestellten und zu der Ablegeeinheit geführten Fasermaterials auf einer formgebenden Werkzeugoberfläche eines Formwerkzeuges ausgebildet ist,
**dadurch gekennzeichnet, dass**
- der Faserlegekopf zusätzlich zu der Ablegeeinheit mindestens ein zu der Ablegeeinheit in der Ebene der Werkzeugoberfläche beabstandet angeordnetes Stützelement aufweist.

## Beschreibung

Die Erfindung betrifft einen Faserlegekopf zum Ablegen von Fasermaterial eines Faserverbundwerkstoffes aufweisend ein Fasermaterial und ein das Fasermaterial einbettendes Matrixmaterial auf ein Formwerkzeug zur Herstellung einer Faserpreform für die Herstellung eines Faserverbundbauteils.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Aber auch die Herstellung von großskaligen Rotorblätter, bspw. für Windkraftanlagen, ist mit Faserverbundwerkstoffen heutzutage möglich und auch sinnvoll. Bei der Herstellung eines Faserverbundbauteils wird dabei ein in ein Fasermaterial infundiertes Matrixmaterial meist unter Temperatur- und Druckbeaufschlagung ausgehärtet bzw. konsolidiert und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Neben trockenen Fasermaterialien, die in einem anschließenden Infusionsprozess mit dem Matrixmaterial infundiert werden müssen, werden auch bereits vorimprägnierte Fasermaterialien (sogenannte Prepregs) verwendet, bei denen das Fasermaterial mit dem Matrixmaterial bereits vorimprägniert ist. Ein anschließender Infusionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet.

Diesen vorteilhaften Eigenschaften steht nachteilig die Tatsache entgegen, dass die Herstellung von Faserverbundbauteilen sehr kostenintensiv ist, da sich die Herstellungsprozesse zum Teil nicht automatisieren lassen oder bei automatisierten Prozessen vermehrt der Blick auf die Qualitätssicherung gelegt werden muss, um fehlerhafte Bauteile aufgrund der Prozessungenauigkeiten auffinden zu können.

Aus der DE 10 2010 015 027 B1 ist beispielsweise eine Faserlegevorrichtung bekannt, bei der die Fasern mit Hilfe von an Robotern angeordneten Faserlegeköpfen auf dem Werkzeug abgelegt werden. Die Roboter sind dabei auf einem um das Werkzeug herumlaufendenden Schienensystem geführt, so dass jede beliebige Position auf dem Werkzeug durch die Roboter erreicht werden kann.

Des Weiteren sind aus der Praxis sogenannte Portalanlagen bekannt, bei denen der Ablegekopf über ein meist horizontal angeordnetes Formwerkzeug verfahrbar ist, um so die Fasern auf dem Formwerkzeug abzulegen.

Aufgrund der Nachgiebigkeit des Gesamtsystems, insbesondere bei Industrierobotern, ist der Ablegeprozess an sich mit einer gewissen Ungenauigkeit behaftet, die bei einigen Bauteilen, insbesondere im sicherheitskritischen Bereich, außerhalb der Toleranzen liegen können. Aber auch die Faserhalbzeuge bzw. das Fasermaterial weist Fertigungstoleranzen auf, die unter Umständen im fertigen Bauteil zu Fehlstellen führen können, die dann den Ausschuss des entsprechend hergestellten Bauteils bedingen. Aus diesem Grund wird nicht selten der Faserlegekopf bzw. die Ablegeeinheit mit der Ablegerolle in Richtung Werkzeugoberfläche gedrückt bzw. mit einer Kraft beaufschlagt, um so die Ablegerolle und das zw. der Ablegerolle und der Werkzeugoberfläche befindliche Fasermaterial auf die Werkzeugoberfläche zu drücken. Daher spricht man häufig auch von einer Anpressrolle.

Soll das Fasermaterial bspw. über eine Nut in der formgebenden Werkzeugoberfläche abgelegt werden, die insbesondere breiter ist als der Durchmesser und/oder die Breite der Ablegerolle, und befindet sich die Ablegerolle während des Ablegens direkt über der Nut (in Form einer Vertiefung oder eines Loches), so wird die Ablegerolle in die Nut gedrückt und unter das Niveau der Werkzeugoberfläche zumindest teilweise verfahren. Dabei entstehen nicht nur unerwünschte Materialüberlängen, da insbesondere auch das bereits abgelegte Fasermaterial in die Nut gedrückt wird, sondern es kann auch zu Materialschäden und Überbeanspruchungen am Endeffektor kommen, wenn die Ablegerolle am Ende der Nut wieder auf die Formwerkzeugoberfläche trifft.

Es ist daher Aufgabe der vorliegenden Erfindung einen verbesserten Faserlegekopf sowie eine verbesserte Faserlegeanlage anzugeben, mit der die aus dem Stand der Technik bekannten Nachteile reduziert bzw. vermieden werden können.

Die Aufgabe wird mit dem Faserlegekopf gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Faserlegekopf zum Ablegen von Fasermaterial auf ein Formwerkzeug zur Herstellung einer Faserpreform für die Herstellung eines Faserverbundbauteils vorgeschlagen, wobei das Fasermaterial Teil eines Faserverbundwerkstoffes aufweisend das Fasermaterial und ein das Fasermaterial einbettendes Matrixmaterial ist. Gattungsgemäß hat der Faserlegekopf unter anderem eine Faserbereitstellungseinrichtung zum Bereitstellen von Fasermaterial an dem Faserlegekopf und eine Ablegeeinheit, die zum Ablegen des dem Faserlegekopf durch die Faserbereitstellungseinrichtung bereitgestellten und zu der Ablegeeinheit geführten Fasermaterials auf einer formgebenden Werkzeugoberfläche eines Formwerkzeuges ausgebildet ist.

Dabei kann die Faserbereitstellungseinrichtung so ausgebildet sein, dass sie eine dem Faserlegekopf zugeführtes Fasermaterial mithilfe einer Faserführungseinrichtung zu der Ablegeeinheit innerhalb des Faserlegekopfes führt. Hierbei wird das Fasermaterial in einem externen Fasermagazin bzw. Faserspeicher bevorratet und kontinuierlich zum Faserlegekopf gefördert. Alternativ kann die Faserbereitstellungseinrichtung auch so ausgebildet sein, dass das für die Ablage vorgesehene Fasermaterial direkt am Faserlegekopf bevorratet ist.

Bei dem zugeführten Fasermaterial kann es sich um trockenes Fasermaterial oder um bereits vorimprägniertes Fasermaterial (Prepregs) handeln.

Die Ablegeeinheit kann beispielsweise als Rolle oder Walze ausgebildet sein oder als Gleitschuh.

Erfindungsgemäß ist nun vorgesehen, dass der Faserlegekopf zusätzlich zu der Ablegeeinheit mindestens ein zu der Ablegeeinheit in der Ebene der Werkzeugoberfläche beabstandet angeordnetes Stützelement aufweist.

Durch das Stützelement an dem Faserlegekopf wird verhindert, dass beim Überfahren einer Lücke in der Werkzeugoberfläche die Ablegeeinheit in die Lücke eintaucht, wodurch die Ablegeeinheit zumindest teilweise unterhalb der Werkzeugoberfläche liegt.

Dabei ist es besonders vorteilhaft, wenn die Summe aller maximalen Abstände zwischen der Ablegeeinheit und den Stützelementen in der Ebene der Werkzeugoberfläche größer oder gleich einer Lücke in der Werkzeugoberfläche ist. Aufgrund der Tatsache, dass der Abstand zwischen dem Stützelement und der Ablegeeinheit größer oder gleich der Lücke in der Werkzeugoberfläche gewählt ist, wird sichergestellt, dass der Faserlegekopf mit dem Stützelement auf der Werkzeugoberfläche aufliegt und diese kontaktiert, während sich die Ablegeeinheit des Faserlegekopfes über der Lücke in der Werkzeugoberfläche befindet.

Ist lediglich ein Stützelement an dem Faserlegekopf vorhanden, so entspricht der maximale Abstand der Entfernung zwischen der Ablegeeinheit und dem Stützelement. Die Entfernung wird dabei insbesondere definiert als die Entfernung zwischen den beiden Kontaktflächen im ruhenden Zustand zwischen Ablegeeinheit und Stützelement.

Ist mehr als ein Stützelement vorgesehen, so ist der maximale Abstand als Summe aller maximalen Teilabstände zwischen der Ablegeeinheit und den Stützelementen zu verstehen.

Sind die Stützelemente und die Ablegeeinheit axial angeordnet, so ist die der maximale Abstand die Entfernung von dem ersten äußeren Ende der Achse bis zu dem gegenüberliegenden zweiten äußeren Ende der Achse. Sind die Stützelemente und die Ablegeeinheit nicht axial angeordnet (bspw. hintereinander), so ist der maximale Abstand die Entfernung von der Kontaktfläche des vordersten Bauelementes (Stützelement, Ablegeeinheit) bis zu dem hintersten Bauelement (Stützelement, Ablegeeinheit) bezogen auf die Ablegerichtung.

Mit anderen Worten, dass mindestens eine Stützelement ist in Bezug zu der Ablegeeinheit unter Berücksichtigung der Breite der Lücke beabstandet derart angeordnet und/oder die Breite aller Stützelemente plus die Breite der Ablegeeinheit sind unter Berücksichtigung der Breite der Lücke in Summe derart gewählt, dass der Faserlegekopf immer durch zumindest eines dieser Bauelemente (Stützelement oder Ablegeeinheit) auf der Werkzeugoberfläche abgestützt wird.

Die Kontaktfläche des mindestens einen Stützelementes und der Ablegeeinheit können dabei in der gleichen Ebene liegen. Dies ist vorteilhaft, wenn das Stützelement in Faserlegerichtung hinter der Ablegeeinheit angeordnet ist und somit das bereits abgelegte Fasermaterial kontaktiert. In diesem Fall stützt sich der Stützelement auf das durch die Ablegeeinheit gerade abgelegte Fasermaterial.

Denkbar ist aber auch, dass die Kontaktfläche des mindestens einen Stützelementes in Faserlegerichtung vor der Ablegeeinheit angeordnet ist, wobei dann vorteilhaft ist, wenn das mindestens eine Stützelement um die Dicke des Fasermaterials in Richtung Werkzeugoberfläche tiefer angeordnet ist, um die Ablage des Fasermaterials an der Ablegeeinheit auszugleichen.

Das Stützelement dient dabei nicht der Ablage des Fasermaterials, sondern dem Abstützen des Faserlegekopfes in denjenigen Situationen, in denen die Ablegeeinheit aufgrund einer Lücke in der Werkzeugoberfläche keinen Kontakt zur Werkzeugoberfläche hat. Das Stützelement ist dabei von der Ablegeeinheit verschieden ausgebildet und ist insbesondere nicht zur Ablage von Fasermaterial vorgesehen bzw. geeignet bzw. hergerichtet.

Mithilfe der vorliegenden Erfindung wird somit möglich, ohne Materialbeschädigungen und Überbeanspruchung der Anlage ein Fasermaterial auch über eine Lücke innerhalb der Werkzeugoberfläche abzulegen.

Gemäß einer Ausführungsform ist vorgesehen, dass der Faserlegekopf weiterhin ausgebildet ist, mittels eines Kraftelementes die Ablegeeinheit mit einer gewissen Anpresskraft beim Ablegen des Fasermaterials auf die Werkzeugoberfläche zu drücken.

Ein solches Kraftelement kann beispielsweise eine Federelement sein, welches den gesamten Faserlegekopf oder zumindest Teile davon in Richtung Werkzeugoberfläche drücken, sodass die Ablegeeinheit mit einer gewissen Anpresskraft beim Ablegen des Fasermaterials auf die Werkzeugoberfläche gedrückt wird.

Hierbei ist es besonders vorteilhaft, wenn das mindestens eine Stützelement in der kinematischen Kette zwischen dem Kraftelement und der Werkzeugoberfläche angeordnet sind. Dadurch wird erreicht, dass trotz des Aufbringens der Anpresskraft die Ablegeeinheit nicht in die Lücke gedrückt wird, da das Stützelement auf der Werkzeugoberfläche aufliegt und somit ein Hineinrücken des Faserlegekopfes und der Ablegeeinheit in die Lücke verhindert.

Gemäß einer Ausführungsform ist vorgesehen, dass das mindestens eine Stützelement als Stützrolle oder Stützwalze ausgebildet und an dem Faserlegekopf angeordnet ist.

Gemäß einer Ausführungsform ist vorgesehen, dass das mindestens eine Stützelement in Ablegerichtung vor und/oder hinter der Ablegeeinheit angeordnet ist.

Dies ist immer dann vorteilhaft, wenn der Verlauf der Lücke in der Werkzeugoberfläche, beispielsweise eine Nut, quer zur Ablegerichtung verläuft und somit die Lücke von dem Faserlegekopf gequert wird.

Gemäß einer Ausführungsform ist vorgesehen, dass das mindestens eine Stützelement in Ablegerichtung neben der Ablegeeinheit angeordnet ist.

Dies ist immer dann vorteilhaft, wenn der Verlauf der Lücke in der Werkzeugoberfläche, beispielsweise eine Nut, im Wesentlichen parallel zur Ablegerichtung verläuft oder unter einem Winkel kleiner 90°, vorzugsweise kleiner 45°.

Gemäß einer Ausführungsform ist vorgesehen, dass das Stützelement derart an dem Faserlegekopf angeordnet ist, dass beim Ablegen des Fasermaterials auf der Werkzeugoberfläche durch die Ablegeeinheit das Stützelement die Werkzeugoberfläche kontaktiert.

Gemäß einer Ausführungsform ist vorgesehen, dass die Ablegeeinheit eine Ablegerolle oder einen Ablegeschuh umfasst.

Die Aufgabe wird im Übrigen auch mit einer Faserlegeanlage gemäß Anspruch 9 erfindungsgemäß gelöst, wobei die Faserlegeanlage eine Bewegungsautomaten, ein Formwerkzeug mit einer formgebenden Werkzeugoberfläche und ein als Endeffektor an dem Bewegungsautomaten angeordneten Faserlegekopf wie vorstehend beschrieben umfasst, wobei die formgebende Werkzeugoberfläche zumindest eine Lücke aufweist.

Die Aufgabe wird auch mit dem Verfahren gemäß Anspruch 10 gelöst. Demnach wird ein Verfahren zur Herstellung eines Faserverbundbauteils aus einem Faserverbundwerkstoff aufweisend ein Fasermaterial und ein das Fasermaterial einbettendes Matrixmaterial beansprucht, wobei das Verfahren die folgenden Schritte umfasst:
- Bereitstellen einer Faserlegeanlage wie vorstehend beschrieben, wobei die formgebende Werkzeugoberfläche als Lücke zumindest eine durch die Werkzeugoberfläche verlaufende Vertiefung aufweist;
- Einbringen von Fasermaterial in die Vertiefung;
- Ablegen von Fasermaterial auf die formgebende Werkzeugoberfläche mittels der bereitgestellten Faserlegeanlage; und
- Aushärten des in das Fasermaterial infundierte Matrixmaterial zur Herstellung des Faserverbundbauteils.

Die Erfindung wird anhand der beigefügten Figuren beispielhaft erläutert. Es zeigen:
- Figur 1: schematische Darstellung einer robotergestützten Faserlegeanlage;
- Figur 2: schematische Darstellung eines seitlichen Ausschnittes eines Faserlegekopfes;
- Figur 3: schematische Darstellung eines hinteren Ausschnittes eines Faserlegekopfes.

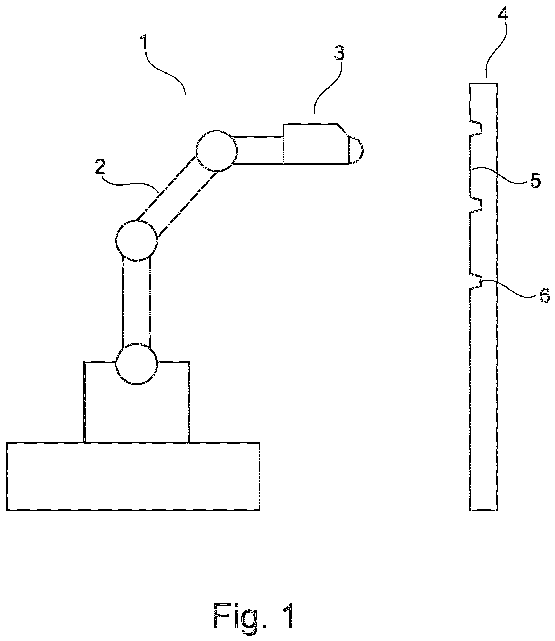

Figur 1 zeigt schematisch eine Faserlegeanlage 1, die einen Roboter 2 in Form eines Knickarmroboters bzw. Industrieroboters hat. Als Endeffektor ist an dem Roboter 2 ein Faserlegekopf 3 angeordnet, der Fasermaterial auf ein Formwerkzeug 4 ablegen kann. Mittels derartiger Faserlegeanlagen können beispielsweise Großbauteile wie Flügelschalen aus einem Faserverbundwerkstoff hergestellt werden.

Das Formwerkzeug 4 weist darüber hinaus eine formgebende Werkzeugoberfläche 5 auf, die in Figur 1 nur schematisch angedeutet ist. Auf diese formgebende Werkzeugoberfläche 5 wird das dem Faserlegekopf 3 zugeführte Fasermaterial abgelegt, in dem der Faserlegekopf 3 gegenüber der formgebenden Werkzeugoberfläche 5 verfahren wird. Dabei wird das dem Faserlegekopf 3 zugeführte Fasermaterial auf die formgebende Werkzeugoberfläche 5 mit einer Anpresskraft gedrückt und darauf abgelegt.

In der formgebenden Werkzeugoberfläche 5 befinden sich Vertiefungen in Form von Lücken 6, in denen zuvor Versteifungselemente (sogenannte Stringer) aus Fasermaterial eingelegt wurden. Diese Versteifungselemente dienen dazu, das später herzustellende flächige Faserverbundbauteil zu stabilisieren und die Steifigkeit zu erhöhen. Erst nach dem Einlegen des Fasermaterials in die Lücken 6 zur Bildung der Versteifungselemente wird das eigentliche flächige Faserverbundbauteil hergestellt, indem das Fasermaterial durch den Faserlegekopf 3 auf die formgebende Werkzeugoberfläche 5 abgelegt wird.

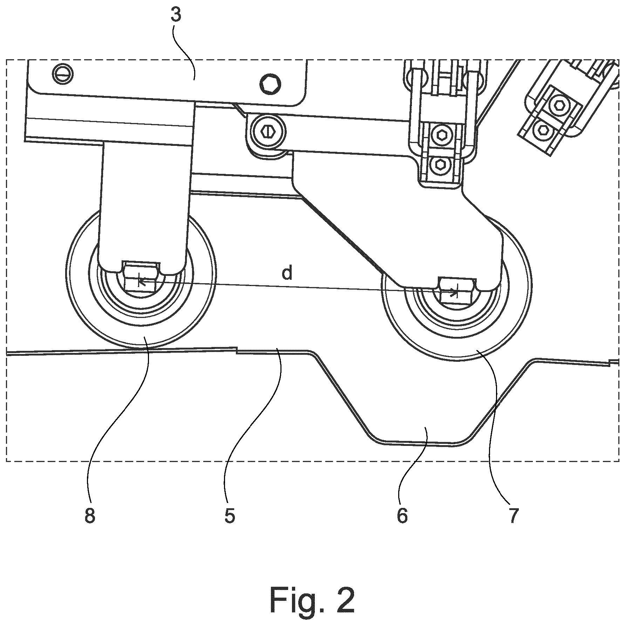

In Figur 2 ist ein solcher Faserlegekopf 3 hinsichtlich der Ablegeeinheit im Detail gezeigt. Der Faserlegekopf 3 weist eine Ablegeeinheit 7 auf, die im Ausführungsbeispiel der Figur 2 als Ablegerolle ausgebildet ist. In Ablegerichtung vor der Ablegerolle ist an dem Faserlegekopf 3 des Weiteren eine Stützrolle 8 angeordnet, um beim Überfahren der Lücken 6 zu verhindern, dass die Ablegerolle 7 in die Lücke 6 aufgrund der auf die Anpressrolle 7 ausgeübte Anpresskraft in die Vertiefung gedrückt wird. Denn dies würde am Ende der Vertiefung dazu führen, dass die Anpressrolle 7 gegen die Kante zwischen Werkzeugoberfläche 5 und Lücke 6 gefahren wird, was zu Beschädigungen an dem Faserlegekopf und des Fasermaterials führen kann.

Hierfür ist der Abstand d zwischen der Ablegerolle 7 und der Stützrolle 8 größer gewählt als der Abstand am oberen Ende der Lücke 6. Hierdurch wird sichergestellt, dass im Falle des Überfahrens der Lücke 6 die Stützrolle 8 immer Kontakt zu der Werkzeugoberfläche 5 hat, während die Ablegerolle 7 über die Lücke 6 bewegt wird.

Dabei kann von vornherein der Abstand d auch von einem Winkel, mit dem die Ablegerichtung auf den Verlauf der Lücke 6 trifft, eingestellt werden, damit zunehmenden Winkel auch der Abstand der Lücke in Bezug auf die Ablegerichtung größer wird.

Damit wird es möglich, in einem Prozessschritt sowohl das flächige Bauteil als auch die an dem Bauteil zu befestigenden Versteifungselemente in einer gemeinsamen Preform herzustellen, sodass vor dem Aushärten des Matrixmaterials die Preform sowohl aus dem flächigen Bauteil als auch aus den daran befestigten Versteifungselementen gebildet ist. Dies wird möglich, da nun die Ablage von Fasermaterial über eine solche Lücke 6 möglich wird, in die die Versteifungselemente zuvor gebildet wurden. Damit lässt sich der gesamte Herstellungsprozess eines solchen versteifen flächigen Bauteils weitestgehend automatisieren.

Im Ausführungsbeispiel der Figur 2 ist die Stützrolle 8 in Ablegerichtung vor der Ablegerolle 7 angeordnet. Denkbar und vom Erfindungsgedanken umfasst ist auch die Variante, dass die Stützrolle in Ablegerichtung hinter der Ablegerolle 7 angeordnet ist. Darüber hinaus ist es denkbar um vom Erfindungsgedanken umfasst, dass sowohl vor der Ablegerolle 7 als auch hinter der Ablegerolle 7 eine entsprechende Stützrolle 8 angeordnet ist.

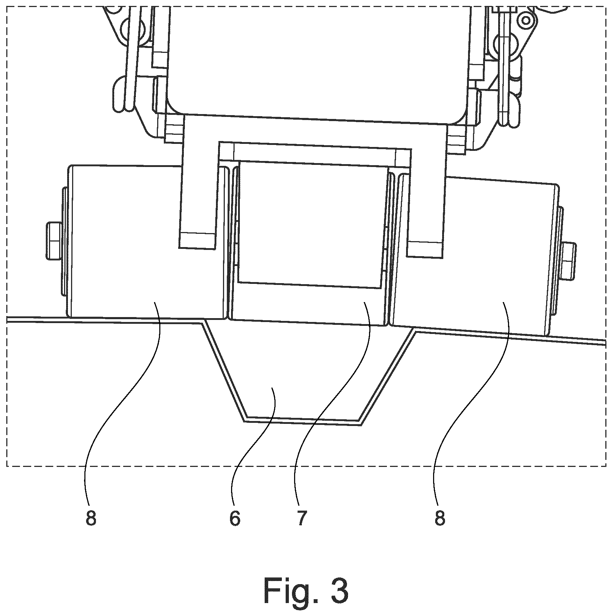

Figur 3 zeigt eine Ausführungsbeispiel, bei dem der Faserlegekopf in etwa parallel zu der Lücke 6 über die Werkzeugoberfläche verfahren wird. Der Faserlegekopf weist hierfür eine Ablegerolle 7 auf, die seitlich von zwei Stützrollen 8 begrenzt wird. Im Ausführungsbeispiel der Figur 3 wird der Faserlegekopf dabei sowohl durch die linke als auch durch die rechte Stützrolle 8 auf der Werkzeugoberfläche abgestützt, während die Ablegerolle 7 frei über der Lücke 6 fährt und schwebt.

### Bezugszeichenliste

- 1: Faserlegeanlage
- 2: Roboter
- 3: Faserlegekopf
- 4: Formwerkzeug
- 5: Werkzeugoberfläche
- 6: Lücke/Vertiefung
- 7: Ablegeeinheit/Ablegerolle
- 8: Stützelement/Stützrolle
- d: Abstand

## Patentansprüche

1. Faserlegekopf (3) zum Ablegen von Fasermaterial eines Faserverbundwerkstoffes aufweisend ein Fasermaterial und ein das Fasermaterial einbettendes Matrixmaterial auf ein Formwerkzeug (4) zur Herstellung einer Faserpreform für die Herstellung eines Faserverbundbauteils, mit
- einer Faserbereitstellungseinrichtung zum Bereitstellen von Fasermaterial an dem Faserlegekopf (3) und
- einer Ablegeeinheit (7), die zum Ablegen des dem Faserlegekopf (3) durch die Faserbereitstellungseinrichtung bereitgestellten und zu der Ablegeeinheit (7) geführten Fasermaterials auf einer formgebenden Werkzeugoberfläche (5) eines Formwerkzeuges (4) ausgebildet ist,
**dadurch gekennzeichnet, dass**
- der Faserlegekopf (3) zusätzlich zu der Ablegeeinheit (7) mindestens ein zu der Ablegeeinheit (7) in der Ebene der Werkzeugoberfläche (5) beabstandet angeordnetes Stützelement (8) aufweist.

2. Faserlegekopf (3) nach Anspruch 1, **dadurch gekennzeichnet, dass** der Faserlegekopf (3) weiterhin ausgebildet ist, mittels eines Kraftelementes die Ablegeeinheit (7) mit einer gewissen Anpresskraft beim Ablegen des Fasermaterials auf die Werkzeugoberfläche (5) zu drücken.

3. Faserlegekopf (3) nach Anspruch 2, **dadurch gekennzeichnet, dass** das mindestens eine Stützelement (8) in der kinematischen Kette zwischen dem Kraftelement und der Werkzeugoberfläche (5) angeordnet sind.

4. Faserlegekopf (3) nach einem der vorhergehenden Ansprüche, **dadurch gekennzeichnet, dass** das mindestens eine Stützelement (8) als Stützrolle (8) oder Stützwalze ausgebildet und an dem Faserlegekopf (3) angeordnet ist.

5. Faserlegekopf (3) nach einem der vorhergehenden Ansprüche, **dadurch gekennzeichnet, dass** das mindestens eine Stützelement (8) in Ablegerichtung vor und/oder hinter der Ablegeeinheit (7) angeordnet ist.

6. Faserlegekopf (3) nach einem der vorhergehenden Ansprüche, **dadurch gekennzeichnet, dass** das mindestens eine Stützelement (8) in Ablegerichtung neben der Ablegeeinheit (7) angeordnet ist.

7. Faserlegekopf (3) nach einem der vorhergehenden Ansprüche, **dadurch gekennzeichnet, dass** das Stützelement (8) derart an dem Faserlegekopf (3) angeordnet ist, dass beim Ablegen des Fasermaterials auf der Werkzeugoberfläche (5) durch die Ablegeeinheit (7) das Stützelement (8) die Werkzeugoberfläche (5) kontaktiert.

8. Faserlegekopf (3) nach einem der vorhergehenden Ansprüche, **dadurch gekennzeichnet, dass** die Ablegeeinheit (7) eine Ablegerolle (7) oder einen Ablegeschuh umfasst.

9. Faserlegeanlage (1) mit einem Bewegungsautomaten, einem Formwerkzeug (4) mit einer formgebenden Werkzeugoberfläche (5) und einem als Endeffektor an dem Bewegungsautomaten angeordneten Faserlegekopf (3) nach einem der vorhergehenden Ansprüche, wobei die formgebenden Werkzeugoberfläche (5) zumindest eine Lücke (6) aufweist.

10. Verfahren zur Herstellung eines Faserverbundbauteils aus einem Faserverbundwerkstoff aufweisend ein Fasermaterial und ein das Fasermaterial einbettendes Matrixmaterial, wobei das Verfahren die folgenden Schritte umfasst:
- Bereitstellen einer Faserlegeanlage (1) gemäß Anspruch 9, wobei die formgebende Werkzeugoberfläche (5) als Lücke (6) zumindest eine durch die Werkzeugoberfläche (5) verlaufende Vertiefung (6) aufweist;
- Einbringen von Fasermaterial in die Vertiefung (6);
- Ablegen von Fasermaterial auf die formgebende Werkzeugoberfläche (5) mittels der bereitgestellten Faserlegeanlage (1); und
- Aushärten des in das Fasermaterial infundierte Matrixmaterial zur Herstellung des Faserverbundbauteils.
